# EUROPÄISCHE PATENTSCHRIFT

(11) **EP 0 164 709 B1**
(45) Veröffentlichungstag und Bekanntmachung des Hinweises auf die Patenterteilung: **03.03.1993**
(21) Anmeldenummer: 85107094.6
(22) Anmeldetag: 08.06.1985
(51) Int. Cl.: B29D 30/30

(54) **Verfahren zum Aufbau von Luftreifen-Rohlingen**
Method for making tyre preforms
Procédé de fabrication d'ébauches de pneumatiques

(30) Priorität: 13.06.1984 DE 3421831
(43) Veröffentlichungstag der Anmeldung: 18.12.1985
(73) Patentinhaber: Fried. Krupp AG, 45143 Essen (DE)
(72) Erfinder: Wedekind, Werner, D-2125 Salzhausen (DE)

(56) Entgegenhaltungen:
- EP-A- 0 091 542
- EP-A- 0 109 475
- DE-A- 2 105 765
- DE-A- 2 507 726
- DE-A- 2 819 410
- FR-A- 2 214 579
- US-A- 3 418 191
- US-A- 4 474 338

## Beschreibung

Die Erfindung bezieht sich auf ein Verfahren nach dem Oberbegriff des Anspruchs 1.

Da die einzelnen Lagen, aus denen ein Luftreifen-Rohling aufgebaut wird, bezogen auf ihre Länge in Umfangsrichtung in der Regel Maße aufweisen, die von der erforderlichen Soll-Länge abweichen, müssen sie, da der Stoß geschlossen werden muß, wobei er jedoch keine Material-Überlappung aufweisen darf, dementsprechend gedehnt oder gestaucht werden.

Das Durchführen des Dehnens bzw. Stauchens durch Handarbeit ist aufwendig und ungenau. Es ist daher bereits ein Verfahren bekannt geworden, bei dem Handarbeit beim Aufbringen der Lagen vermieden werden soll (DE-PS 32 13 366). Bei diesem die Merkmale des Oberbegriffs des Anspruchs 1 aufweisenden Verfahren wird das automatische Aufbauen der Reifen-Rohlinge dadurch erzielt, daß die Lage stets auf Untermaß zugeschnitten wird und der Umfang der Aufbautrommel genau der Länge der zugeschnittenen Lage durch Einstellen des Trommeldurchmessers auf einen gegenüber dem Enddurchmesser kleineren Durchmesser angepaßt wird und danach die Aufbautrommel nach dem Aufbringen der Lage auf den Enddurchmesser gedehnt wird. Der Nachteil dieses Verfahrens liegt insbesondere darin, daß der Durchmesser der Aufbautrommel praktisch nach jedem Aufbringen einer Lage geändert, d.h. neu eingestellt werden muß. Nach der in der US-PS 4 474 338 wiedergegebenen japanischen Offenlegungsschrift 57-125030 werden die Lagen zuerst bei gleicher Geschwindigkeit von Auflegeband und Aufbautrommel auf die Aufbautrommel gebracht. Dann wird das Auflegeband mit einer von der Umfangsgeschwindigkeit der Aufbautrommel und deren Durchmesser abgeleiteten zweiten Geschwindigkeit angetrieben, so daß die Lagen auf einem Teil ihrer Länge mehr oder weniger gereckt oder gestaucht werden und auf ihrer Gesamtlänge unerwünschte Dickenabweichungen aufweisen. Außerdem werden Umfangsänderungen, sei es durch die Dicke bereits aufgelegter Streifen, sei es durch konstruktionsbedingte, nicht absolut identische Durchmessereinstellung nach einer Durchmesserverstellung zum Zweck der Abnahme eines fertigen Streifenpaketes oder bei der Fertigung unterschiedlicher Reifengrößen, nicht berücksichtigt, so daß insoweit die Geschwindigkeitsregelung des Auflegebandes in Abhängigkeit von dem maßgebenden Signal zwar zu einer weitgehend jeweils gleichen Auflegelänge des auf die Trommel aufgegebenen Streifens führen kann. Dabei ist aber noch nicht ein Auflegen erreicht, bei dem Anfang und Ende eines Streifens sich jeweils abstandslos aneinanderfügen.

Der Erfindung liegt die Aufgabe zugrunde, ein Verfahren zu schaffen, mit dem ein automatisches Aufbringen der Lagen unter Einhaltung sowohl der jeweiligen genauen Umfangslänge als auch während eines Umlaufs gleichbleibender Dicke zu erzielen ist, ohne daß der Durchmesser der Aufbautrommel geändert werden muß. Die Aufgabe wird dadurch gelöst, daß die Längenänderung dadurch bewirkt wird, daß die Aufbautrommel beim Aufbringen einer Lage mittels eines umlaufenden Auflegebandes mit einer je Umlauf gleichbleibenden Umfangsgeschwindigkeit betrieben wird, die durch Einstellen der Winkelgeschwindigkeit an der Aufbautrommel in Abhängigkeit von dem ermittelten Meßwert jeder Lage gegenüber der Geschwindigkeit des Auflegebandes so festgelegt ist, daß die Stoßfläche geschlossen wird.

Der Vorteil der Erfindung liegt in erster Linie darin, daß das Verfahren vielseitig und anpassungsfähig ist, z.B. indem das Zuschneiden der Lagen nicht auf Untermaß beschränkt ist. Die Lagen können Bestandteil eines Gürtels, einer Karkasse, eines Laufstreifens o.dgl. sein und verstärkende Einlagen aus Stahldraht oder anderem geeigneten Material enthalten. Es wird ferner möglich, sich beim Zuschneiden der erforderlichen Soll-Länge der Lagen weitestgehend anzunähern, so daß durch Gleichmäßigkeit eine hohe Qualität der Luftreifen erzielt wird.

Vorteilhafte Weiterbildungen des Verfahrens nach der Erfindung sind in den Ansprüchen 2 bis 5 wiedergegeben.

Ausführungsbeispiele des Verfahrens nach der Erfindung werden anhand der in der Zeichnung dargestellten Vorrichtungen näher erläutert.

Es zeigen
- Fig. 1: schematisch eine Aufbautrommel mit angelegtem Auflegeband im Schnitt und
- Fig. 2: eine Vorrichtung zum Aufbringen der Lagen in Ansicht in schematischer Darstellung.

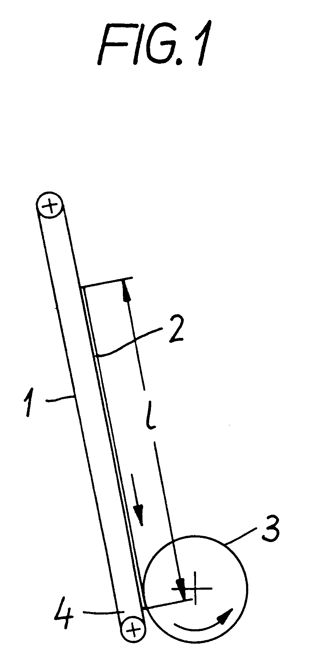

Wie aus Fig. 1 zu ersehen ist, wird auf einem Auflegeband 1 eine die Istlänge l aufweisende Lage einer Aufbautrommel 3 zugeführt, indem das endlose umlaufende Auflegeband 1 mit seinem zuführenden Ende 4 an der in gleicher Richtung umlaufenden Aufbautrommel 3 anliegt und an dieser Stelle die Lage 2 übergibt. Auflegeband 1 und Aufbautrommel 3 sind jeweils mit Haltevorrichtungen versehen (z.B. bei dem Aufbringen von sogenannten Textilgürteln mit Saugnäpfen), wobei die Haltevorrichtungen so dimensioniert oder gesteuert sind, daß die Lage 2 vom Auflegeband abgegeben und von der Aufbautrommel übernommen werden.

Die Istlänge l der Lage 2 ist vor dem Aufbringen bestimmt worden und wird selbsttätig in einen Rechner eingegeben, wo sie mit der sich aus dem maßgebenden Umfang der Aufbautrommel 3 als Sollwert für die Länge der Lage 2 verglichen wird. Auflegeband und Aufbautrommel weisen jeweils einen Antrieb auf, die nunmehr so gesteuert werden, daß die Umfangsgeschwindigkeiten des maßgebenden Umfangs dem Verhältnis zwischen Istund Sollänge der Lage 2 entsprechen. Daraus ergibt sich, daß im Falle Istlänge < Sollänge die Aufbautrommel 3 um einen solchen Betrag schneller umläuft als das Auflegeband 1, daß die Stelle des Anfangs der Lage 2 auf der Aufbautrommel 3 mit der Stelle des Endes der Lage übereinstimmt, d.h. daß die Stoßfläche geschlossen wird, was durch entsprechendes Recken der Lage erzielt wird. Im Falle, daß die Istlänge > als die Sollänge wird die Lage 2 beim Aufbringen gestaucht. Selbstverständlich wird in dem Fall, wo Ist- und Solllänge übereinstimmen - was beim Verfahren nach der Erfindung angestrebt wird -, mit gleichem Umfangsgeschwindigkeitsverhältnis gefahren.

Auf die erste auf die Aufbautrommel 3 aufgebrachte, jetzt ringförmige Lage wird anschließend mittels des Auflegebands 1 die nachfolgende Lage unter Berücksichtigung des jetzt größeren Trommeldurchmessers bzw. -umfangs in gleicher Weise aufgebracht. Die Berücksichtigung des sich ändernden Umfangs erübrigt sich, wenn an der Aufbautrommel die Winkelgeschwindigkeit eingestellt wird.

Die Lagen werden im Regelfall von einem bandförmigen Streifen zugeführt und abgeschnitten. Das Erzielen einer bestimmten Istlänge der Lagen macht bekanntlich deshalb Schwierigkeiten, weil das Material aus Kautschuk oder ähnlichen Werkstoffen eingebettete Verstärkungsfäden oder -litzen aufweist, die nicht durchgeschnitten werden können bzw. dürfen. Die Fäden, Litzen oder Drähte sind unter einem schrägen Winkel im Streifen angeordnet, der dann unter dem gleichen Winkel geschnitten werden muß. Außerdem ergeben sich Änderungen der Istlänge auch durch wellenförmige Verwerfungen bei der Zuführung des Streifens. Da das Auflegeband 1 nach der Erfindung mit Einrichtungen versehen ist, die die aufzubringende Lage jeweils dicht an dessen Gurt anlegt, kann die Istlänge der Lage in diesem fixierten Zustand auf dem Auflegeband sehr genau bestimmt werden.

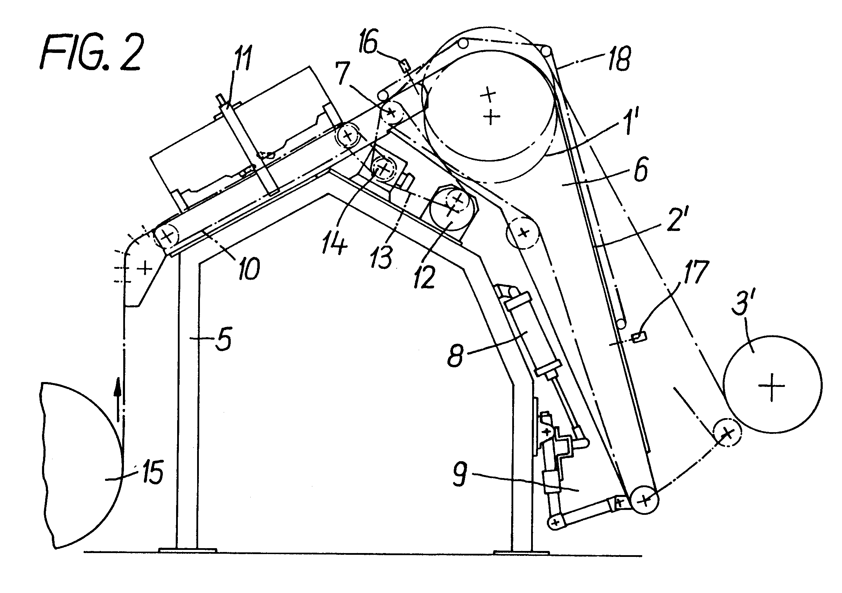

Beim dem in Fig. 2 dargestellten Ausführungsbeispiel einer anderen Vorrichtung ist auf einem portalartigen Gestell 5 eine Schwinge 6 um eine horizontale Achse 7 schwenkbar angelenkt, welche das Auflegeband 1' trägt. Die Schwinge ist mittels eines durch einen Pneumatikzylinder 8 angetriebenen Gestänges 9 an die mit horizontaler Achse verlagerte Aufbautrommel 3' anstellbar. Die Aufbautrommel 3' ist auf verschiedene Außendurchmesser in bekannter Weise einstellbar. Dem Auflegeband 1' ist ein auf dem Gestell 5 gelagertes umlaufendes Schneidband 10 vorgeschaltet, über dem eine Schneidvorrichtung 11 zum Zuschneiden der Lagen angeordnet ist. Das Auflegeband 1' wird mittels eines auf dem Gestell 5 angeordneten Gleichstromgetriebemotors 12 angetrieben, der über einen Zahnriemen 13 auf eine Antriebsrolle des Auflegebands 1' wirkt. Mit diesem Antrieb ist der Antrieb 14 des Schneidbands 10 gekoppelt.

Ein Streifen von Gürtelmaterial wird von einer Vorratsrolle 15 abgezogen und über das Schneidband 10 dem Auflegeband 1' zugeführt. Eingangs des Auflegebands 1' ist ein Lichttaster 16 angeordnet, der beim Passieren des Streifenanfangs, der auch den Anfang der ersten Lage darstellt, einen nicht gezeigten Vorwahlzähler startet, der die Impulse eines mit dem Antrieb des Auflegebands 1' gekoppelten Impulsgebers zählt. Unabhängig von der Geschwindigkeit des Auflegebandes entspricht jeder aufgenommene Impuls einem bestimmten Bandvorschub. Wenn die vorgewählte Impulszahl entsprechend der Länge der Lage erreicht ist, werden Auflege- und Schneidband gestoppt und die Schneidvorrichtung 11 zum Abschneiden der Lage in Tätigkeit gesetzt. Anschließend fördert das Auflegeband 1' die abgeschnittene Lage so weit, bis der Anfang der Lage die Auflegeposition zur Übergabe auf die Aufbautrommel 3' erreicht hat. Diese Position wird eingestellt und durch einen weiteren Lichttaster 17, der über dem Auflegeband 1' nahe der Aufbautrommel 3' angeordnet ist, bestimmt und geschaltet.

Zum Bestimmen der Istlänge der Lage wird gleichzeitig mit dem Vorvahlzähler zur Bestimmung der Schnittlänge der Lage ein weiterer Impulszähler gestartet, der abgeschaltet wird, sobald das Ende der Lage den Lichttaster 16 passiert. Die von diesem Impulszähler ermittelte Impulszahl ist proportional der Istlänge der Lage. Zur Verbesserung des Anliegens der Lage am Auflegeband 1' ist auf diesem zwischen dem Schneidband 10 und der Aufbautrommel 3' ein umlaufendes Deckband 18 angeordnet. Dadurch ist eine weitere Verbesserung der Bestimmung der Istlänge der Lage gewährleistet.

Nachdem die Lage 2' die Auflegeposition auf dem gestoppten Auflegeband erreicht hat, das aus der ermittelten Istlänge und der Sollänge errechnete Geschwindigkeitsverhältnis bestimmt und der Steuerung der Antriebe von Auflegeband und Aufbautrommel aufgegeben sind, schwenkt die Schwinge 6 bis zur Anlage der Lage 2 an die Aufbautrommel 3' heran. Danach werden die elektrisch miteinander gekoppelten Antriebe von Aufbautrommel und Auflegeband eingeschaltet und die Lage, wie bereits beschrieben, aufgebracht.

Eine noch größere Genauigkeit bei der Aufbringung einer Lage auf die Aufbautrommel wird dadurch erzielt, daß aufgrund ermittelter Istwerte der Geschwindigkeiten des Auflegebandes und der Aufbautrommel zu Anfang des Aufbringens geregelt wird. Dazu werden Impulse vom Antrieb des Auflegebandes und von einem direkt mit der Welle der Aufbautrommel gekoppelten Impulsgeber jeweils aufgenommen und miteinander verglichen. Ein Impulsübersetzer hebt oder senkt die Impulsfrequenz im Falle einer Abweichung auf das Niveau der anderen Seite an bzw. ab. Eine Gleichlaufregelung der Antriebe hält in der Folge die Impulsfrequenzen beider Seiten auf gleicher Höhe.

Weitere Genauigkeitsverbesserungen ergeben sich durch die Verwendung eines Zahnriemens für das Auflegeband und von sogenannten Scheibenläufer-Getriebemotoren für die Antriebe. Durch die genannten Maßnahmen wird an den Stoßstellen eine solche Genauigkeit erreicht, daß Abweichungen von der Sollänge im Bereich von wenigen zehntel Millimetern liegen.

Als Aufbautrommel kommen unverstellbare sowie bekannte verstellbare Systeme in Betracht. Die verstellbaren Aufbautrommeln brauchen im Normalfall nur einmal auf die vorgesehene Reifengröße eingestellt werden. Sollten sich im Laufe der Herstellung einer Serie gleicher Reifen geringfügige Durchmesserverstellungen ergeben, so können diese durch das Verfahren nach der Erfindung beim Aufbringen ohne Schwierigkeiten ausgeglichen werden. Im Falle des Einsatzes von Stahlgürteln sind zum Halten der Lagen unter dem Auflegeband bzw. dem Mantel der Aufbautrommel angeordnete Magnete vorgesehen, die so angeordnet bzw. dimensioniert sind, daß die Übergabe der Lage vom Auflegeband auf die Aufbautrommel reibungslos abläuft.

## Patentansprüche

1. Verfahren zum Aufbringen einzelner Lagen (2) auf den Außenumfang einer Aufbautrommel (3) beim Aufbau von Luftreifen-Rohlingen, wobei die Lagen (2), bezogen auf ihre Länge in Umfangsrichtung jeweils ermittelte unterschiedliche Maße aufweisen und zur Erzielung der Endlänge zum Schließen der Stoßfläche in ihrer Länge verändert werden,
**dadurch gekennzeichnet**, daß die Längenänderung dadurch bewirkt wird, daß die Aufbautrommel (3) beim Aufbringen einer Lage (2) mittels eines umlaufenden Auflegebandes (1) mit einer je Umlauf gleichbleibenden Umfangsgeschwindigkeit betrieben wird, die durch Einstellen der Winkelgeschwindigkeit an der Aufbautrommel (3) in Abhängigkeit von dem ermittelten Meßwert jeder Lage (2) gegenüber der Geschwindigkeit des Auflegebandes (1) so festgelegt ist, daß die Stoßfläche geschlossen wird.

2. Verfahren nach Anspruch 1 dadurch gekennzeichnet, daß die Länge der aufzubringenden Lage (2) jeweils auf dem Auflegeband (1) vor dem Zuführen zur Aufbautrommel (3) ermittelt wird.

3. Verfahren nach Anspruch 1 oder 2, dadurch gekennzeichnet, daß die Länge der aufzubringenden Lage (2) durch Impulszählung ermittelt wird.

4. Verfahren nach einem der vorhergehenden Ansprüche, insbesondere nach Anspruch 3, dadurch gekennzeichnet, daß die Istwerte der Geschwindigkeit der Aufbautrommel (3) und des Auflegebandes (1) am Anfang des Aufbringens jeweils ermittelt und - falls erforderlich - für eine Korrektur des Geschwindigkeitsverhältnisses herangezogen werden.

5. Verfahren nach einem der vorhergehenden Ansprüche, dadurch gekennzeichnet, daß die Lagen (2) höchstens auf die erforderliche Länge zugeschnitten werden.

## Claims

1. A method of applying individual layers (2) to the external periphery of a mounting drum (3) for the construction of pneumatic tyre blanks, wherein the layers (2) each have different dimensions determined with reference to their length in the peripheral direction, their length being changed to produce the final length for closing the abutment surface, characterized in that to change the length the mounting drum (3) is operated during the application of a layer (2) by means of a rotating applicator belt (1) at a speed which remains constant per rotation and which is so fixed in relation to the speed of the applicator belt (1) by the adjustment of the angular speed on the mounting belt (3) in dependence on the determined measured value of each layer (2) that the abutment surface is closed.

2. A method according to claim 1, characterized in that the length of the layer (2) to be applied is determined every time on the applicator (1) prior to supply to the mounting drum (3).

3. A method according to claim 1 or 2 characterized in that the length of the layer (2) to be applied is determined by pulse counting.

4. A method according to one of the preceding claims, more particularly claim 3, characterized in that the actual values of the speed of the mounting drum (3) and the applicator belt (1) are determined every time at the start of layer application and if necessary are used for a correction of the speed ratio.

5. A method according to one of the preceding claims, characterized in that the layers are cut at most to the required length.

## Revendications

1. Procédé pour déposer des couches séparées (2) sur la périphérie extérieure d'un tambour de montage (3) pour la fabrication d'ébauches de pneumatiques, procédé pour lequel les couches (2), rapportées à leur longueur suivant la direction périphérique, présentant chacune des mesures déterminées différentes et étant modifiées en longueurpour obtenir la longueur définitive permettant de fermer leur surface de joint,
caractérisé en ce que
la modification de longueur est provoquée par le fait que le tambour de montage (3), au moment de la dépose d'une couche (2), est chaque fois entraîné à une vitesse de rotation constante au moyen d'une bande d'amenée, sans fin (1), cette vitesse de rotation étant déterminée par le réglage de la vitesse angulaire sur le tambour de montage (3) en fonction de la valeur de mesure déterminée pour chaque couche (2) par rapport à la vitesse de rotation de la bande d'amenée (1), de telle façon que la surface de joint soit fermée.

2. Procédé suivant la revendication 1, caractérisé en ce que la longueur de la couche (2) à déposer est chaque fois déterminée, sur la bande d'amenée (1), avant d'arriver sur le tambour de montage (3).

3. Procédé suivant la revendication 1 ou 2, caractérisé en ce que la longueur de la couche (2) à déposer est déterminée par un comptage d'impulsions.

4. Procédé suivant l'une des revendications précédentes, en particulier suivant la revendication 3, caractérisé en ce que les valeurs réelles de la vitesse du tambour de montage (3) et de la bande d'amenée (1) sont chaque fois déterminées au début de la mise en place, et en ce que - si nécessaire - elles sont soumises à une correction des conditions de vitesse.

5. Procédé suivant l'une des revendications précédentes, caractérisé en ce que les couches (2) sont coupées au plus à la longueur nécessaire.
